# EUROPÄISCHE PATENTSCHRIFT

(11) **EP 3 577 368 B1**
(45) Veröffentlichungstag und Bekanntmachung des Hinweises auf die Patenterteilung: **28.10.2020**
(21) Anmeldenummer: 18704171.0
(22) Anmeldetag: 30.01.2018
(51) Int. Cl.: F16H 1/28, F16H 1/46, F16H 57/033

(54) **GETRIEBEBAUREIHE**
SERIES OF GEARBOXES
SÉRIE DE BOÎTES DE VITESSES

(30) Priorität: 03.02.2017 DE 102017201738
(43) Veröffentlichungstag der Anmeldung: 11.12.2019
(73) Patentinhaber: ZF Friedrichshafen AG, 88046 Friedrichshafen (DE); ZF Wind Power Antwerpen NV, 3920 Lommel (BE)
(72) Erfinder: SMOOK, Warren, 3040 Huldenberg (BE)
(74) Vertreter: ZF Friedrichshafen AG
(86) Internationale Anmeldenummer: PCT/EP2018/052215
(87) Internationale Veröffentlichungsnummer: WO 2018/141715

(56) Entgegenhaltungen:
- EP-A1- 2 554 839
- DE-A1- 4 202 199
- DE-A1- 10 028 046
- DE-A1- 10 123 548
- DE-A1-102007 034 449
- DE-A1-102014 226 007

## Beschreibung

Die Erfindung betrifft eine Baureihe nach dem Oberbegriff von Anspruch 1. So eine Baureihe ist aus der DE102014226007A bekannt.

Die Konstruktion und Fertigung von Getrieben erfordert einen erheblichen - Investitions- und Ressourcenaufwand. Viele Anbieter sind daher bestrebt, mit einem einzigen Getriebetyp möglichst viele Anwendungsfälle abzudecken. Dies aber führt dazu, dass das Getriebe bei Anwendungsfällen mit geringen Belastungen überdimensioniert ist. Ein überdimensioniertes Getriebe wiederum bietet Potenzial für Kosteneinsparungen.

Vor diesem Hintergrund bietet sich die Entwicklung einer Getriebebaureihe an. Eine Baureihe ermöglicht es, einerseits Komponenten in verschiedenen Getrieben der Baureihe zu verwenden. Andererseits lassen sich die Getriebe der Baureihe an spezifische Anwendungsfälle anpassen. Beides wirkt sich kostensparend aus.

Im Bereich der Windkraftanlagen allerdings konnten sich herkömmliche Arten von Getriebebaureihen bisher nicht durchsetzen. Der Einsatz von Baureihen ist hier schwierig, da die Anlagenhersteller stark voneinander abweichende Schnittstellen zwischen der Anlage und dem Getriebe vorgeben. Weiterhin muss eine stark variierende Bandbreite von Lastfällen abgedeckt werden.

Der vorliegenden Erfindung liegt die Aufgabe zugrunde, Getriebe für Windkraftanlagen unter Umgehung der den aus dem Stand der Technik bekannten Lösungen innewohnenden Nachteile verfügbar zu machen. Insbesondere sollen ohne Beeinträchtigung technischer Eigenschaften Kosten reduziert werden.

Diese Aufgabe wird gelöst durch eine Baureihe nach Anspruch 1. Bevorzugte Weiterbildungen sind in den Unteransprüchen enthalten.

Eine Baureihe ist definiert als eine Mehrzahl einzelner Vorrichtungen. Die erfindungsgemäße Baureihe besteht aus Getrieben, vorzugsweise Getriebe für Windkraftanlagen, und umfasst mindestens ein erstes Getriebe und ein zweites Getriebe.

Jedes Getriebe der Baureihe weist eine erste Planetenstufe und eine zweite Planetenstufe auf. Bei einer Planetenstufe handelt es sich um eine Getriebestufe mit einem Hohlrad, einem Sonnenrad, einem Planetenträger und einem oder mehreren, vorzugsweise baugleichen, Planetenrädern. Die Planetenräder sind drehbar in dem Planetenträger gelagert und kämmen jeweils mit dem Hohlrad und/oder dem Sonnenrad. Zwei beliebige der drei Komponenten Sonnenrad, Planetenträger und Hohlrad sind drehbar gelagert. Die dritte Komponente ist drehfest angeordnet.

Der Planetenträger der ersten Planetenstufe des ersten Getriebes und der Planetenträger der ersten Planetenstufe des zweiten Getriebes sind baugleich. So sind etwa die Anzahl der Planeten, die sich in den Planetenträger der ersten Planetenstufe des ersten Getriebes und in den Planetenträger der ersten Planetenstufe des zweiten Getriebes unterbringen lassen, gleich.

Allgemein sind zwei Komponenten dann baugleich, wenn sie sich abgesehen von Fertigungstoleranzen gleichen. Insbesondere stimmen sämtliche physikalischen Parameter, wie etwa die Abmessungen oder die Materialeigenschaften, der Bauteile im Rahmen der Fertigungstoleranzen überein. Baugleiche Komponenten zeichnen sich dadurch aus, dass sie gegeneinander austauschbar sind.

Erfindungsgemäß ist die Breite der Zähne der Planetenräder der ersten Planetenstufe des ersten Getriebes geringer als die Breite der Zähne der Planetenräder der ersten Planetenstufe des zweiten Getriebes. Dies impliziert, dass die Zähne der Planetenräder jeweils gleich breit sind.

Mit der Breite eines Zahns eines Zahnrads wird seine räumliche Ausdehnung in axialer Richtung, d.h. entlang einer Drehachse des Zahnrads, bezeichnet.

Die Erfindung zeichnet sich dadurch aus, dass die baugleichen Planetenträger der ersten Planetenstufen des ersten Getriebes und des zweiten Getriebes so ausgestaltet sind, dass sie sowohl die Planetenräder der ersten Planetenstufe des ersten Getriebes als auch die Planetenräder der ersten Planetenstufe des zweiten Getriebes aufnehmen können. Ein solcher Planetenträger lässt sich wahlweise mit Planetenrädern bestücken, die schmalere oder breitere Zähne aufweisen. Hierdurch lassen sich einerseits Skaleneffekte realisieren. Andererseits ermöglicht die unterschiedliche Breite der Zähne eine lastspezifische Adaption der Getriebe.

Analog zu der Breite der Zähne der Planetenräder kann die Breite der Zähne des Hohlrads der ersten Planetenstufe des ersten Getriebes geringer sein als die Breite der Zähne des Hohlrads der ersten Planetenstufe des zweiten Getriebes, und/oder die Breite der Zähne des Sonnenrads der ersten Planetenstufe des ersten Getriebes kann geringer sein als die Breite der Zähne des Sonnenrads der ersten Planetenstufe des zweiten Getriebes. Auch ist es möglich, ein Hohlrad der ersten Planetenstufe des ersten Getriebes zu verwenden, das baugleich mit dem Hohlrad der ersten Planetenstufe des zweiten Getriebes ist. Analog können die Sonnenräder der ersten Planetenstufe des ersten Getriebes und der ersten Planetenstufe des zweiten Getriebes baugleich sein.

In einer bevorzugten Weiterbildung sind die Planetenräder der zweiten Planetenstufe des ersten Getriebes und die Planetenräder der zweiten Planetenstufe des zweiten Getriebes baugleich. Somit kann jedes der Planetenräder wahlweise in die zweite Planetenstufe des ersten Getriebes oder in die zweite Planetenstufe des zweiten Getriebes eingesetzt werden.

Auch die Sonnenräder der zweiten Planetenstufe des ersten Getriebes und die Sonnenräder der zweiten Planetenstufe des zweiten Getriebes sind in einer bevorzugten Weiterbildung baugleich, so dass solche Sonnenräder wahlweise in die zweite Planetenstufe des ersten Getriebes oder die zweite Planetenstufe des zweiten Getriebes eingesetzt werden können.

In einer darüber hinaus bevorzugten Weiterbildung sind die Hohlräder der zweiten Planetenstufe des ersten Getriebes und die Hohlräder der zweiten Planetenstufe des zweiten Getriebes baugleich. Auch die Hohlräder können somit wahlweise in die zweite Planetenstufe des ersten Getriebes oder in die zweite Planetenstufe des zweiten Getriebes eingesetzt werden.

Erfindungsgemäss, weisen die erste Planetenstufe des dritten Getriebes und die erste Planetenstufe des vierten Getriebes eine gleiche Anzahl von Planetenrädern auf.

Die Anzahl der Planetenräder der ersten Stufe des dritten Getriebes unterscheidet sich allerdings von der Anzahl der Planetenräder der ersten Planetenstufe des ersten Getriebes. Entsprechend unterscheidet sich die Zahl der Planetenräder der ersten Planetenstufe des vierten Getriebes von der Zahl der Planetenräder der ersten Planetenstufe des zweiten Getriebes. So können etwa die ersten Planetenstufen des dritten Getriebes und des vierten Getriebes jeweils vier Planetenräder aufweisen, während die erste Planetenstufe des ersten Getriebes und die erste Planetenstufe des zweiten Getriebes jeweils drei Planetenräder aufweisen.

Da jedes Planetenrad auf genau einem Planetenbolzen drehbar gelagert ist, gilt entsprechendes für die Anzahl der Planetenbolzen in den einzelnen Planetenstufen.

Analog zu den Breitenverhältnissen der Zähne der Planetenräder der ersten Planetenstufen des ersten Getriebes und des zweiten Getriebes ist erfindungsgemäss die Breite der Planetenräder der ersten Planetenstufe des dritten Getriebes geringer als die Breite der Zähne der Planetenräder der ersten Planetenstufe des vierten Getriebes. Ebenso kann die Breite der Zähne des Hohlrads der ersten Planetenstufe des dritten Getriebes geringer sein als die Breite der Zähne des Hohlrads der ersten Planetenstufe des vierten Getriebes, und/oder die Breite der Zähne der ersten Planetenstufe des dritten Getriebes kann geringer sein als die Breite der Zähne des Sonnenrads der ersten Planetenstufe des vierten Getriebes. Alternativ können die Zähne der Sonnenräder und/oder der Hohlräder der ersten Planetenstufen des dritten Getriebes und des vierten Getriebes gleich breit sein. Insbesondere ist es möglich, für die erste Planetenstufe des dritten Getriebes und des vierten Getriebes baugleiche Hohlräder zu verwenden, und/oder für die ersten Planetenstufen des dritten Getriebes und des vierten Getriebes baugleiche Sonnenräder zu verwenden.

In einer bevorzugten Weiterbildung beschränken sich die Unterschiede der ersten Planetenstufen des ersten Getriebes und des dritten Getriebes auf die Planetenträger und damit verbunden die Zahl der Planetenräder, Planetenbolzen und Planetenlager. Baugleich hingegen sind weiterbildungsgemäß jeweils die Planetenräder, die Sonnenräder und/oder die Hohlräder der ersten Planetenstufen des ersten Getriebes und des dritten Getriebes. Die Planetenräder der ersten Planetenstufe des ersten Getriebes und des dritten Getriebes sind also weiterbildungsgemäß austauschbar. Ebenso sind die Sonnenräder der ersten Planetenstufen des ersten Getriebes und des dritten Getriebes weiterbildungsgemäß austauschbar, und die Hohlräder der ersten Planetenstufen des ersten Getriebes und des dritten Getriebes sind weiterbildungsgemäß austauschbar.

Entsprechendes gilt in einer bevorzugten Weiterbildung für die ersten Planetenstufen des zweiten Getriebes und des vierten Getriebes. So sind jeweils die Planetenräder, die Sonnenräder und die Hohlräder der ersten Planetenstufen des zweiten Getriebes und des vierten Getriebes baugleich. Dies impliziert, dass die Planetenräder der ersten Planetenstufen des zweiten Getriebes und des vierten Getriebes austauschbar sind. Ebenso sind die Sonnenräder der ersten Planetenstufen des zweiten Getriebes und des vierten Getriebes weiterbildungsgemäß austauschbar, und die Hohlräder der ersten Planetenstufen des zweiten Getriebes und des vierten Getriebes sind weiterbildungsgemäß austauschbar.

Die Planetenräder der zweiten Planetenstufen des dritten Getriebes und des vierten Getriebes sind in einer bevorzugten Weiterbildung baugleich. Die Planetenräder lassen sich somit innerhalb der zweiten Planetenstufe des dritten Getriebes, innerhalb der zweiten Planetenstufe des vierten Getriebes und zwischen den zweiten Planetenstufen des dritten Getriebes und des vierten Getriebes austauschen.

Bei baugleichen Planetenrädern der zweiten Planetenstufen des ersten Getriebes und des zweiten Getriebes sowie baugleichen Planetenrädern der zweiten Planetenstufen des dritten Getriebes und des vierten Getriebes unterscheidet sich in einer bevorzugten Weiterbildung die Breite der Zähne der Planetenräder der zweiten Planetenstufen des ersten Getriebes und des zweiten Getriebes von der Breite der Planetenräder der zweiten Getriebestufen des dritten Getriebes und des vierten Getriebes. Dies ermöglicht eine präzisere Anpassung der Belastbarkeit des Getriebes an die zu erwartenden Lastfälle.

Alle Planetenträger der zweiten Stufen der Getriebe, insbesondere des ersten Getriebes, des zweiten Getriebes, des dritten Getriebes und des vierten Getriebes, sind in einer darüber hinaus bevorzugten Weiterbildung baugleich. Dies impliziert, dass die Anzahlen der Planetenräder der zweiten Planetenstufen des ersten Getriebes, des zweiten Getriebes, des dritten Getriebes und des vierten Getriebes übereinstimmen.

Baugleich sind in einer zudem bevorzugten Weiterbildung auch alle Hohlräder und/oder alle Sonnenräder der zweiten Planetenstufen des ersten Getriebes, des zweiten Getriebes, des dritten Getriebes und des vierten Getriebes.

Baugleich sind in darüber hinaus bevorzugten Weiterbildung auch ein oder mehrere Planetenbolzen der ersten Planetenstufen, ein oder mehrere Planetenbolzen der zweiten Planetenstufen, ein oder mehrere Planetenlager der ersten Planetenstufen, ein oder mehrere Planetenlager der zweiten Planetenstufen, drehbar gelagerte planetenträger der ersten Planetenstufen und/oder Planetenträgerlager der zweiten Planetenstufen der Getriebe, insbesondere des ersten Getriebes, des zweiten Getriebes, des dritten Getriebes und des vierten Getriebes.

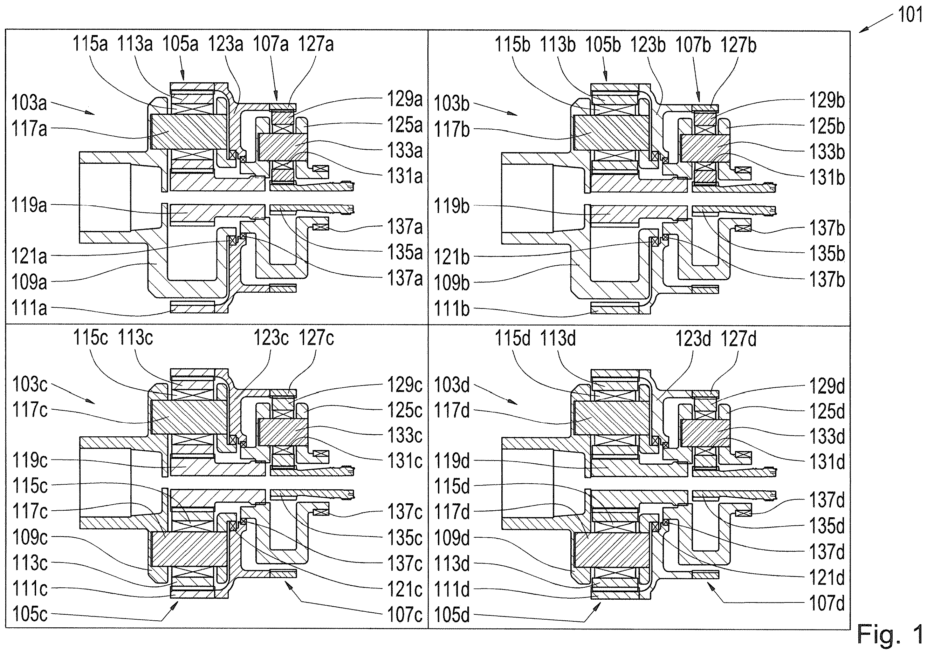

Ein bevorzugtes Ausführungsbeispiel der Erfindung ist in Fig. 1 dargestellt. Übereinstimmende Bezugsziffern kennzeichnen dabei gleiche oder funktionsgleiche Merkmale. Im Einzelnen zeigt:
Fig. 1 eine Getriebebaureihe.

Die in Fig. 1 dargestellte Baureihe 101 umfasst ein erstes Getriebe 103a, ein zweites Getriebe 103b, ein drittes Getriebe 103c und ein viertes Getriebe 103d. Jedes der vier Getriebe 103a, 103b, 103c und 103d weist eine erste Planetenstufe 105a, 105b, 105c, 105d und eine zweite Planetenstufe 107a, 107b, 107c, 107d auf.

Die ersten Planetenstufen 105a, 105b, 105c, 105d umfassen jeweils einen Planetenträger 109a, 109b, 109c, 109d, ein Hohlrad 111a, 111b, 111c, 111d, Planetenräder 113a, 113b, 113c, 113d, Planetenlager 115a, 115b, 115c, 115d, Planetenbolzen 117a, 117b, 117c, 117d, ein Sonnenrad 119a, 119b, 119c, 119d und ein Planetenträgerlager 121a, 121b, 121c,121d. Die Planetenräder 113a, 113b, 113c, 113d sind mittels der Planetenlager 115a, 115b, 115c, 115d drehbar in jeweils einem Planetenbolzen 117a, 117b, 117c, 117d gelagert. Die Planetenbolzen 117a, 117b, 117c, 117d wiederum sind in der jeweiligen ersten Planetenstufe 105a, 105b, 105c, 105d starr fixiert. Jedes Planetenrad 113a, 113b, 113c, 113d kämmt mit dem Sonnenrad 111a, 111b, 111c, 111d und dem Hohlrad 111a, 111b, 111c, 111d.

Die Getriebe 103a, 103b, 103c, 103d weisen jeweils ein Getriebegehäuse 123a, 123b, 123c, 123d auf, in dem der jeweilige Planetenträger 109a, 109b, 109c, 109d der ersten Planetenstufe 105a, 105b, 105c, 105d mittels des zugehörigen Planetenträgerlagers 121a, 121b, 121c, 121d drehbar gelagert ist. Die Hohlräder 111a, 111b, 111c, 111d der ersten Planetenstufen 105a, 105b, 105c, 105d sind jeweils drehfest in dem Getriebegehäuse 123a, 123b, 123c, 123d fixiert. Die Sonnenräder 119a, 119b, 119c, 119d der ersten Planetenstufen 105a, 105b, 105c, 105d sind drehbar gelagert.

Die zweiten Planetenstufen 107a, 107b, 107c, 107d sind analog aufgebaut. So umfassen die zweiten Planetenstufen 107a, 107b, 107c, 107d jeweils einen Planetenträger 125a, 125b, 125c, 125d, ein Hohlrad 127a, 127b, 127c, 127d, Planetenräder 129a, 129b, 129c, 129d, Planetenlager 131a, 131b, 131c, 131d, Planetenbolzen 133a, 133b, 133c, 133d, ein Sonnenrad 135a, 135b, 135c, 135d, und Planetenträgerlager 137a, 137b, 137c, 137d. Der Planetenträge 125a, 125b, 125c, 125d der zweiten Planetenstufen 107a, 107b, 107c, 107d ist jeweils drehfest mit dem Sonnenrad 119a, 119b, 119c, 119d der ersten Planetenstufe 105a, 105b, 105c, 105d des jeweiligen Getriebes 103a, 103b, 103c, 103d verbunden und mittels der Planetenträgerlager 137a, 137b, 137c, 137d in dem jeweiligen Getriebegehäuse 123a, 123b, 123c, 123d gelagert.

Drehfest mit dem Getriebegehäuse 123a, 123b, 123c, 123d verbunden ist das Hohlrad 127a, 127b, 127c, 127d der zweiten Planetenstufe 107a, 107b, 107c, 107d. Die Planetenräder 129a, 129b, 129c, 129d kämmen jeweils mit dem Hohlrad 127a, 127b, 127c, 127d und dem Sonnenrad 135a, 135b, 135c, 135d der zweiten Planetenstufe 107a, 107b, 107c, 107d und sind mittels jeweils eines Planetenlagers 131a, 131b, 131c, 131d drehbar in einem Planetenbolzen 133a, 133b, 133c, 133d gelagert. Der Planetenbolzen 133a, 133b, 133c, 133d wiederum ist starr in dem Planetenträger 125a, 125b ,125c, 125d fixiert.

Die Sonnenräder 135a, 135b, 135c, 135d der zweiten Planetenstufen 107a, 107b, 107c, 107d sind jeweils drehbar gelagert. Hierüber lässt sich etwa eine in Fig. 1 nicht dargestellte, nachgeschaltete Stirnradstufe antreiben.

Eine Reihe von Komponenten werden in allen vier Getrieben 103a, 103b, 103c, 103d baugleich verwendet. So sind die Planetenlager 115a, 115b 115c, 115d der ersten Planetenstufen 105a, 105b, 105c 105d baugleich; die Planetenlager 131a, 131b, 131c, 131d der zweiten Planetenstufen 107a, 107b, 107c, 107d sind baugleich; die Planetenbolzen 107a, 107b, 107c, 107d der ersten Planetenstufen 105a, 105b, 105c, 105d sind baugleich; die Planetenbolzen 133a, 133b, 133c, 133d der zweiten Planetenstufen 107a, 107b, 107c, 107d sind baugleich; die Hohlräder 127a, 127b, 127c, 127d der zweiten Planetenstufen 107a, 107b, 107c, 107d sind baugleich; die Sonnenräder 135a, 135b, 135c, 135d der zweiten Planetenstufen 107a, 107b, 107c, 107d sind baugleich; die Planetenträgerlager 137a, 137b, 137c, 137d der zweiten Planetenstufen 107a, 107b, 107c, 107d sind baugleich; die Planetenträger 125a, 125b, 125c, 125d der zweiten Planetenstufen 107a, 107b, 107c, 107d sind baugleich; und die generatorseitigen Planetenträgerlager 121a, 121b, 121c, 121d der ersten Planetenstufen 105a, 105b, 105c, 105d sind baugleich.

Generatorseitige Planetenträgerlager der ersten Planetenstufen 105a, 105b, 105c, 105d hingegen, die in Fig. 1 nicht dargestellt sind, können dem jeweiligen Lastfall angepasst werden und somit getriebespezifisch sein.

Die Hohlräder 111a, 111c, die Planetenräder 113a, 113c und die Sonnenräder 119a, 119c der ersten Planetenstufen 105a, 105c des ersten Getriebes 103a, und des dritten Getriebes 103c sind jeweils baugleich ausgeführt. Entsprechend sind jeweils die Sonnenräder 111b, 111d, die Planetenräder 113b, 113d und die Sonnenräder 119b, 119d der ersten Planetenstufen 105b, 105d des zweiten Getriebes 103b und des vierten Getriebes 103d baugleich.

Die ersten Getriebestufen 105a, 105b des ersten Getriebes 103a und des zweiten Getriebes 103b umfassen jeweils genau drei Planetenräder 113a, 113b. Genau vier Planetenräder 113c, 113d weisen die ersten Planetenstufen 105c, 105d des dritten Getriebes 103c und des vierten Getriebes 103d auf.

Die Breite der einzelnen in den ersten Getriebestufen 105a, 105c des ersten Getriebes 103a und des dritten Getriebes 103c enthaltenen Planetenräder 111a, 111c, 113a, 113c, 119a, 119c ist geringer als die Breite der entsprechenden, in den ersten Planetenstufen 105b, 105d des zweiten Getriebes 103b und des dritten Getriebes 103d enthaltenen Planetenräder 111b, 111d, 113b, 113d, 119b, 119d. Dennoch sind die Planetenträger 109a, 109b, 109c, 109d so ausgelegt, dass sie sowohl schmale Planetenräder 113a, 113c als auch breite Planetenräder 113b, 113d aufnehmen können. Dies ermöglicht es, in dem ersten Getriebe 103a und in dem zweiten Getriebe 103b baugleiche Planetenträger 109a, 109b der ersten Planetenstufe 105a, 105b zu verwenden. Ebenso lassen sich baugleiche Planetenträger 109c, 109d in den ersten Planetenstufen 105c, 105d des dritten Getriebes 103c und des vierten Getriebes 103d verwenden. Die durch diese Maßnahme zusätzlichen anfallenden Materialkosten sind sehr gering. Andererseits lassen sich aber bei der Umstellung zwischen den schmalen und den breiten Ausführungsformen der Planetenräder beträchtliche Anpassungskosten einsparen.

Die Anzahl der Planetenräder 129a, 129b, 129c, 129d in den zweiten Planetenstufen 107a, 107b, 107c, 107d beträgt pro Getriebe 103a, 103b, 103c, 103d jeweils genau drei.

Die zweite Planetenstufe 107a des ersten Getriebes 103a und die zweite Planetenstufe 107b des zweiten Getriebes 103b sind baugleich. Ebenso sind die zweite Planetenstufe 107c des dritten Getriebes 103c und die zweite Planetenstufe 107d des vierten Getriebes 103d baugleich. Insbesondere sind die Planetenräder 129a, 129b der zweiten Planetenstufen 107a, 107b des ersten Getriebes 103a und des zweiten Getriebes 103b baugleich. Entsprechend sind die Planetenräder 129c, 129d der zweiten Planetenstufen 107c, 107d des dritten Getriebes 103c und des vierten Getriebes 103d baugleich.

Unterschiede gibt es hinsichtlich der Breite. So sind die Planetenräder 129a, 129b der zweiten Planetenstufen 107a, 107b des ersten Getriebes 103a und des zweiten Getriebes 103b schmaler als die Planetenräder 129c, 129d der zweiten Planetenstufen 107c, 107d des dritten Getriebes 103c und des vierten Getriebes 103d.

Durch Vergrößerung der Zahl der Planetenräder in den ersten Planetenstufen 105a, 105b, 105c, 105d von drei auf vier erhöht sich die Belastbarkeit des jeweiligen Getriebes um etwa 20%. Eine Vergrößerung der Breite in der ersten Planetenstufe 105a, 105b, 105c, 105d führt zu einer Erhöhung der Belastbarkeit um etwa 10%.

In den zweiten Planetenstufen 107a, 107b, 107c, 107d werden aufgrund der beschränkten Platzverhältnisse lediglich drei Planetenräder 129a, 129b, 129c, 129d verwendet. Eine Erhöhung der Zahl der Planetenräder ist hier nicht erforderlich, da sich durch Variationen der Breite der Planetenräder 129a, 129b, 129c, 129d bereits eine hinreichende Anpassung der zweiten Planetenstufen 107a, 107b, 107c, 107d an die verschiedenen Varianten der ersten Planetenstufen 105a, 105b, 105c, 105d hinsichtlich ihrer Belastbarkeit realisieren lässt.

### Bezugszeichen

- 101: Baureihe
- 103a: erstes Getriebe
- 103b: zweites Getriebe
- 103c: drittes Getriebe
- 103d: viertes Getriebe
- 105a: erste Planetenstufe
- 105b: erste Planetenstufe
- 105c: erste Planetenstufe
- 105d: erste Planetenstufe
- 107a: zweite Planetenstufe
- 107b: zweite Planetenstufe
- 107c: zweite Planetenstufe
- 107d: zweite Planetenstufe
- 109a: Planetenträger
- 109b: Planetenträger
- 109c: Planetenträger
- 109d: Planetenträger
- 111a: Hohlrad
- 111b: Hohlrad
- 111c: Hohlrad
- 111d: Hohlrad
- 113a: Planetenrad
- 113b: Planetenrad
- 113c: Planetenrad
- 113d: Planetenrad
- 115a: Planetenlager
- 115b: Planetenlager
- 115c: Planetenlager
- 115d: Planetenlager
- 117a: Planetenbolzen
- 117b: Planetenbolzen
- 117c: Planetenbolzen
- 117d: Planetenbolzen
- 119a: Sonnenrad
- 119b: Sonnenrad
- 119c: Sonnenrad
- 119d: Sonnenrad
- 121a: Planetenträgerlager
- 121b: Planetenträgerlager
- 121c: Planetenträgerlager
- 121d: Planetenträgerlager
- 123a: Getriebegehäuse
- 123b: Getriebegehäuse
- 123c: Getriebegehäuse
- 123d: Getriebegehäuse
- 125a: Planetenträger
- 125b: Planetenträger
- 125c: Planetenträger
- 125d: Planetenträger
- 127a: Hohlrad
- 127b: Hohlrad
- 127c: Hohlrad
- 127d: Hohlrad
- 129a: Planetenrad
- 129b: Planetenrad
- 129c: Planetenrad
- 129d: Planetenrad
- 131a: Planetenlager
- 131b: Planetenlager
- 131c: Planetenlager
- 131d: Planetenlager
- 133a: Planetenbolzen
- 133b: Planetenbolzen
- 133c: Planetenbolzen
- 133d: Planetenbolzen
- 135a: Sonnenrad
- 135b: Sonnenrad
- 137c: Sonnenrad
- 137d: Sonnenrad
- 139a: Planetenträgerlager
- 139b: Planetenträgerlager
- 139c: Planetenträgerlager
- 139d: Planetenträgerlager

## Patentansprüche

1. Baureihe (101) bestehend aus Getrieben (103a, 103b, 103c, 103d), umfassend ein erstes Getriebe (103a), ein zweites Getriebe (103b), ein drittes Getriebe (103c) und ein viertes Getriebe (103d); wobei
die Getriebe (103a, 103b, 103c, 103d) jeweils eine erste Planetenstufe (105a, 105b, 105c, 105d) und eine zweite Planetenstufe (107a, 107b, 107c, 107d) aufweisen; wobei
die erste Planetenstufe (105a, 105b, 105c, 105d) und die zweite Planetenstufe (107a, 107b, 107c, 107d)jeweils ein Hohlrad (111a, 111b, 111c, 111d, 127a, 127b, 127c, 127c), ein Sonnenrad (119a, 119b, 119c, 119d, 135a, 135b, 135c, 135d), einen Planetenträger (109a, 109b, 109c, 109d, 125a, 125b, 125c, 125d) und ein oder mehrere Planetenräder (113a, 113b, 113c, 113d, 129a, 129b, 129c, 129d) aufweisen; wobei
die Planetenträger (109a, 109b) der ersten Planetenstufen (105a, 105b) des ersten Getriebes (103a) und des zweiten Getriebes (103b) baugleich sind; und wobei die Planetenträger (109c, 109d) der ersten Planetenstufen (105c, 105d) des dritten Getriebes (103c) und des vierten Getriebes (103d) baugleich sind; **dadurch gekennzeichnet, dass**
die Breite der Zähne der Planetenräder (113a) der ersten Planetenstufe (105a) des ersten Getriebes (103a) geringer ist als die Breite der Zähne der Planetenräder (113b) der ersten Planetenstufe (105b) des zweiten Getriebes (103b); wobei die Zahl der Planetenräder (113a) der ersten Planetenstufe (105a) des ersten Getriebes (103a) geringer ist als die Zahl der Planetenräder (113c) der ersten Planetenstufe (105c) des dritten Getriebes (103c); und wobei
die Breite der Zähne der Planetenräder (113c) der ersten Planetenstufe (105c) des dritten Getriebes (103c) geringer ist als die Breite der Zähne der Planetenräder (113d) der ersten Planetenstufe (105d) des vierten Getriebes (103d).

2. Baureihe (101) nach Anspruch 1; **dadurch gekennzeichnet, dass**
die Planetenräder (129a, 129b) der zweiten Planetenstufen (107a, 107b) des ersten Getriebes (103a) und des zweiten Getriebes (103b) baugleich sind.

3. Baureihe (101) nach dem vorhergehenden Anspruch; **dadurch gekennzeichnet, dass**
die Sonnenräder (135a, 135b) der zweiten Planetenstufen (107a, 107b) des ersten Getriebes (103a) und des zweiten Getriebes (103b) baugleich sind.

4. Baureihe (101) nach einem der vorhergehenden zwei Ansprüche; **dadurch gekennzeichnet, dass**
die Hohlräder (127a, 127b) der zweiten Planetenstufen (107a, 107b) des ersten Getriebes (103a) und des zweiten Getriebes (103b) baugleich sind.

5. Baureihe (101) nach einem der vorhergehenden Ansprüche; **dadurch gekennzeichnet, dass**
die Planetenräder (113a, 113c), die Sonnenräder (119a, 119c) und/oder die Hohlräder (127a, 127c) der ersten Planetenstufen (105a, 105c) des ersten Getriebes (103a) und des dritten Getriebes (103c) jeweils baugleich sind.

6. Baureihe nach einem der vorhergehenden Ansprüche; **dadurch gekennzeichnet, dass**
die Planetenräder (113b, 113d), die Sonnenräder (119b, 119d) und/oder die Hohlräder (127b, 127d) der ersten Planetenstufen (105b, 105d) des zweiten Getriebes (103b) und des vierten Getriebes (103d) jeweils baugleich sind.

7. Baureihe (101) nach dem vorhergehenden drei Anspruch; **dadurch gekennzeichnet, dass**
die Planetenräder (129c, 129d) der zweiten Planetenstufen (107c, 107d) des dritten Getriebes (103c) und des vierten Getriebes (103c) baugleich sind.

8. Baureihe (101) nach dem vorhergehenden Anspruch, rückbezogen auf Anspruch 2; **dadurch gekennzeichnet, dass**
die Breite der Zähne der Planetenräder (129a, 129b) der zweiten Planetenstufen (107a, 107b) des ersten Getriebes (103a) und des zweiten Getriebes (103b) sich von der Breite der Zähne der Planetenräder (129c, 129d) der zweiten Planetenstufen (107a, 107b) des dritten Getriebes (103c) und des vierten Getriebes (103d) unterscheidet.

9. Baureihe (101) nach einem der vorhergehenden Ansprüche; **dadurch gekennzeichnet, dass**
alle Planetenträger (125a, 125b, 125c, 125d) der zweiten Planetenstufen (107a, 107b, 107c, 107d) der Getriebe (103a, 103b, 103c, 103d) baugleich sind.

10. Baureihe (101) nach einem der vorhergehenden Ansprüche; **dadurch gekennzeichnet, dass**
alle Hohlräder (127a, 127b, 127c, 127d) der zweiten Planetenstufen (107a, 107b, 107c, 107d) der Getriebe (103a, 103b, 103c, 103d) baugleich sind.

11. Baureihe (101) nach einem der vorhergehenden Ansprüche; **dadurch gekennzeichnet, dass**
alle Sonnenräder (135a, 135b, 135c, 135d) der zweiten Planetenstufen (107a, 107b, 107c, 107d) der Getriebe (103a, 103b, 103c, 103d) baugleich sind.

12. Baureihe (101) nach einem der vorhergehenden Ansprüche; **dadurch gekennzeichnet, dass**
die erste Planetenstufe (105a, 105b, 105c, 105d) einen oder mehrere Planetenbolzen (117a, 117b, 117c, 117d) aufweist; wobei
alle Planetenbolzen (117a, 117b, 117c, 117d) der ersten Planetenstufen (105a, 105b, 105c, 105d) der Getriebe (103a, 103b, 103c, 103d) baugleich sind.

13. Baureihe (101) nach einem der vorhergehenden Ansprüche; **dadurch gekennzeichnet, dass**
die zweite Planetenstufe (107a, 107b, 107c, 107d) einen oder mehrere Planetenbolzen (133a, 133b, 133c, 133d) aufweist; wobei
alle Planetenbolzen (133a, 133b, 133c, 133d) der zweiten Planetenstufen (107a, 107b, 107c, 107d) der Getriebe (103a, 103b, 103c, 103d) baugleich sind.

14. Baureihe (101) nach einem der vorhergehenden Ansprüche; **dadurch gekennzeichnet, dass**
die erste Planetenstufe (105a, 105b, 105c, 105d) ein oder mehrere Planetenlager () aufweist; wobei
die Planetenlager (115a, 115b, 115c, 115d) der ersten Planetenstufen (105a, 105b, 105c, 105d) der Getriebe (103a, 103b, 103c, 103d) baugleich sind.

15. Baureihe (101) nach einem der vorhergehenden Ansprüche; **dadurch gekennzeichnet, dass**
die zweite Planetenstufe (107a, 107b, 107c, 107d) ein oder mehrere Planetenlager (131a, 131b, 131c, 131d) aufweist; wobei
die Planetenlager (131a, 131b, 131c, 131d) der zweiten Planetenstufen (107a, 107b, 107c, 107d) der Getriebe (103a, 103b, 103c, 103d) baugleich sind.

16. Baureihe (101) nach einem der vorhergehenden Ansprüche; **dadurch gekennzeichnet, dass**
die erste Planetenstufe (105a, 105b, 105c, 105d) mindestens ein Planetenträgerlager (121a, 121b, 121c, 121d) aufweist; wobei
die Planetenträgerlager (121a, 121b, 121c, 121d) der ersten Planetenstufen (105a, 105b, 105c, 105d) der Getriebe (103a, 103b, 103c, 103d) baugleich sind.

17. Baureihe (101) nach einem der vorhergehenden Ansprüche; **dadurch gekennzeichnet, dass**
die zweite Planetenstufe (107a, 107b, 107c, 107d) mindestens ein Planetenträgerlager (139a, 139b, 139c, 139d) aufweist; wobei
die Planetenträgerlager (139a, 139b, 139c, 139d) der zweiten Planetenstufen (107a, 107b, 107c, 107d) der Getriebe (103a, 103b, 103c, 103d) baugleich sind.

## Claims

1. Série (101) constitute de boîtes de vitesses (103a, 103b, 103c, 103d), comportant une premiere boîte de vitesses (103a), une deuxième boîte de vitesses (103b), une troisième boîte de vitesses (103c) et une quatrième boîte de vitesses (103d) ; dans laquelle
les boîtes de vitesses (103a, 103b, 103c, 103d) comprennent respectivement un premier étage planétaire (105a, 105b, 105c, 105d) et un deuxième étage planétaire (107a, 107b, 107c, 107d) ; dans laquelle
le premier étage planétaire (105a, 105b, 105c, 105d) et le deuxième étage planétaire (107a, 107b, 107c, 107d) comprennent respectivement une couronne (111a, 111b, 111c, 111d, 127a, 127b, 127c, 127c), une roue planétaire (119a, 119b, 119c, 119d, 135a, 135b, 135c, 135d), un porte-satellites (109a, 109b, 109c, 109d, 125a, 125b, 125c, 125d) et un ou plusieurs satellites (113a, 113b, 113c, 113d, 129a, 129b, 129c, 129d) ; dans laquelle
les porte-satellites (109a, 109b) des premiers étages planétaires (105a, 105b) de la première boîte de vitesses (103a) et de la deuxième boîte de vitesses (103b) sont de construction identique ; et dans laquelle
les porte-satellites (109c, 109d) des premiers étages planétaires (105c, 105d) de la troisième boîte de vitesses (103c) et de la quatrième boîte de vitesses (103d) sont de construction identique ; **caractérisée en ce que**
la largeur des dents des satellites (113a) du premier étage planétaire (105a) de la première boîte de vitesses (103a) est inférieure a la largeur des dents des satellites (113b) du premier étage planétaire (105b) de la deuxième boîte de vitesses (103b) ; dans laquelle
le nombre de satellites (113a) du premier étage planétaire (105a) de la première boîte de vitesses (103a) est inférieur au nombre de satellites (113c) du premier étage planétaire (105c) de la troisième boîte de vitesses (103c) ; et dans laquelle
la largeur des dents des satellites (113c) du premier étage planétaire (105c) de la troisième boîte de vitesses (103c) est inférieure a la largeur des dents des satellites (113d) du premier étage planétaire (105d) de la quatrième boîte de vitesses (103d).

2. Série (101) selon la revendication 1 ; **caractérisée en ce que**
les satellites (129a, 129b) des deuxièmes étages planétaires (107a, 107b) de la première boîte de vitesses (103a) et de la deuxième boîte de vitesses (103b) sont de construction identique.

3. Série (101) selon la revendication précédente ; **caractérisée en ce que**
les roues planétaires (135a, 135b) des deuxièmes étages planétaires (107a, 107b) de la première boîte de vitesses (103a) et de la deuxième boîte de vitesses (103b) sont de construction identique.

4. Série (101) selon l'une des deux revendications précédentes ; **caractérisée en ce que**
les couronnes (127a, 127b) des deuxièmes étages planétaires (107a, 107b) de la première boîte de vitesses (103a) et de la deuxième boîte de vitesses (103b) sont de construction identique.

5. Série (101) selon l'une des revendications précédentes ; **caractérisée en ce que**
les satellites (113a, 113c), les roues planétaires (119a, 119c) et/ou les couronnes (127a, 127c) des premiers étages planétaires (105a, 105c) de la première boîte de vitesses (103a) et de la troisième boîte de vitesses (103c) sont respectivement de construction identique.

6. Série selon l'une des revendications précédentes ; **caractérisée en ce que**
les satellites (113b, 113d), les roues planétaires (119b, 119d) et/ou les couronnes (127b, 127d) des premiers étages planétaires (105b, 105d) de la deuxième boîte de vitesses (103b) et de la quatrième boîte de vitesses (103d) sont respectivement de construction identique.

7. Série (101) selon les trois revendications précédentes ; **caractérisée en ce que**
les satellites (129c, 129d) des deuxièmes étages planétaires (107c, 107d) de la troisième boîte de vitesses (103c) et de la quatrième boîte de vitesses (103c) sont de construction identique.

8. Série (101) selon la revendication précédente, se rapportant a la revendication 2 ; **caractérisée en ce que** la largeur des dents des satellites (129a, 129b) des deuxièmes étages planétaires (107a, 107b) de la première boîte de vitesses (103a) et de la deuxième boîte de vitesses (103b) diffère de la largeur des dents des satellites (129c, 129d) des deuxièmes étages planétaires (107a, 107b) de la troisième boîte de vitesses (103c) et de la quatrième boîte de vitesses (103d).

9. Série (101) selon l'une des revendications précédentes ; **caractérisée en ce que**
tous les porte-satellites (125a, 125b, 125c, 125d) des deuxièmes étages planétaires (107a, 107b, 107c, 107d) de la boîte de vitesses (103a, 103b, 103c, 103d) sont de construction identique.

10. Série (101) selon l'une des revendications précédentes ; **caractérisée en ce que**
toutes les couronnes (127a, 127b, 127c, 127d) des deuxièmes étages planétaires (107a, 107b, 107c, 107d) de la boîte de vitesses (103a, 103b, 103c, 103d) sont de construction identique.

11. Série (101) selon l'une des revendications précédentes ; **caractérisée en ce que**
toutes les roues planétaires (135a, 135b, 135c, 135d) des deuxièmes étages planétaires (107a, 107b, 107c, 107d) de la boîte de vitesses (103a, 103b, 103c, 103d) sont de construction identique.

12. Série (101) selon l'une des revendications précédentes ; **caractérisée en ce que**
le premier étage planétaire (105a, 105b, 105c, 105d) comprend un ou plusieurs axes de satellites (117a, 117b, 117c, 117d) ;
tous les axes de satellites (117a, 117b, 117c, 117d) des premiers étages planétaires (105a, 105b, 105c, 105d) de la boîte de vitesses (103a, 103b, 103c, 103d) étant de construction identique.

13. Série (101) selon l'une des revendications précédentes ; **caractérisée en ce que**
le deuxième étage planétaire (107a, 107b, 107c, 107d) comprend un ou plusieurs axes de satellites (133a, 133b, 133c, 133d) ;
tous les axes de satellites (133a, 133b, 133c, 133d) des deuxièmes étages planétaires (107a, 107b, 107c, 107d) de la boîte de vitesses (103a, 103b, 103c, 103d) étant de construction identique.

14. Série (101) selon l'une des revendications précédentes ; **caractérisée en ce que**
le premier étage planétaire (105a, 105b, 105c, 105d) comprend un ou plusieurs paliers de satellites ();
les paliers de satellites (115a, 115b, 115c, 115d) des premiers étages planétaires (105a, 105b, 105c, 105d) de la boîte de vitesses (103a, 103b, 103c, 103d) étant de construction identique.

15. Série (101) selon l'une des revendications précédentes ; **caractérisée en ce que**
le deuxième étage planétaire (107a, 107b, 107c, 107d) comprend un ou plusieurs paliers de satellites (131a, 131b, 131c, 131 d) ;
les paliers de satellites (131a, 131b, 131c, 131d) des deuxièmes étages planétaires (107a, 107b, 107c, 107d) de la boîte de vitesses (103a, 103b, 103c, 103d) étant de construction identique.

16. Série (101) selon l'une des revendications précédentes ; **caractérisée en ce que**
le premier étage planétaire (105a, 105b, 105c, 105d) comprend au moins un palier de porte-satellites (121a, 121b, 121c, 121d) ;
les paliers de porte-satellites (121a, 121b, 121c, 121d) des premiers étages planétaires (105a, 105b, 105c, 105d) de la boîte de vitesses (103a, 103b, 103c, 103d) étant de construction identique.

17. Série (101) selon l'une des revendications précédentes ; **caractérisée en ce que**
le deuxième étage planétaire (107a, 107b, 107c, 107d) comprend au moins un palier de porte-satellites (139a, 139b, 139c, 139d) ;
les paliers de porte-satellites (139a, 139b, 139c, 139d) des deuxièmes étages planétaires (107a, 107b, 107c, 107d) de la boîte de vitesses (103a, 103b, 103c, 103d) étant de construction identique.

## Revendications

1. Model séries (101) composed of transmissions (103a, 103b, 103c, 103d), comprising a first transmission (103a), a second transmission (103b), a third transmission (103c) and a fourth transmission (103d); wherein
the transmissions (103a, 103b, 103c, 103d) have in each case one first planetary stage (105a, 105b, 105c, 105d) and one second planetary stage (107a, 107b, 107c, 107d); wherein
the first planetary stage (105a, 105b, 105c, 105d) and the second planetary stage (107a, 107b, 107c, 107d) have in each case one internal gear (111a, 111b, 111c, 111d, 127a, 127b, 127c, 127c), one sun gear (119a, 119b, 119c, 119d, 135a, 135b, 135c, 135d), one planet carrier (109a, 109b, 109c, 109d, 125a, 125b, 125c, 125d) and one or more planet gears (113a, 113b, 113c, 113d, 129a, 129b, 129c, 129d); wherein
the planet carriers (109a, 109b) of the first planetary stages (105a, 105b) of the first transmission (103a) and of the second transmission (103b) are structurally identical; and wherein
the planet carriers (109c, 109d) of the first planetary stages (105c, 105d) of the third transmission (103c) and of the fourth transmission (103d) are structurally identical; **characterized in that**
the width of the teeth of the planet gears (113a) of the first planetary stage (105a) of the first transmission (103a) is smaller than the width of the teeth of the planet gears (113b) of the first planetary stage (105b) of the second transmission (103b); wherein
the number of planet gears (113a) of the first planetary stage (105a) of the first transmission (103a) is lower than the number of planet gears (113c) of the first planetary stage (105c) of the third transmission (103c); and wherein
the width of the teeth of the planet gears (113c) of the first planetary stage (105c) of the third transmission (103c) is smaller than the width of the teeth of the planet gears (113d) of the first planetary stage (105d) of the fourth transmission (103d).

2. Model séries (101) according to Claim 1; **characterized in that**
the planet gears (129a, 129b) of the second planetary stages (107a, 107b) of the first transmission (103a) and of the second transmission (103b) are structurally identical.

3. Model séries (101) according to the preceding claim; **characterized in that**
the sun gears (135a, 135b) of the second planetary stages (107a, 107b) of the first transmission (103a) and of the second transmission (103b) are structurally identical.

4. Model séries (101) according to either of the preceding two claims; **characterized in that**
the internal gears (127a, 127b) of the second planetary stages (107a, 107b) of the first transmission (103a) and of the second transmission (103b) are structurally identical.

5. Model séries (101) according to any of the preceding claims; **characterized in that**
the planet gears (113a, 113c), the sun gears (119a, 119c) and/or the internal gears (127a, 127c) of the first planetary stages (105a, 105c) of the first transmission (103a) and of the third transmission (103c) are in each case structurally identical.

6. Model séries according to any of the preceding claims; **characterized in that**
the planet gears (113b, 113d), the sun gears (119b, 119d) and/or the internal gears (127b, 127d) of the first planetary stages (105b, 105d) of the second transmission (103b) and of the fourth transmission (103d) are in each case structurally identical.

7. Model séries (101) according to the preceding three claims; **characterized in that**
the planet gears (129c, 129d) of the second planetary stages (107c, 107d) of the third transmission (103c) and of the fourth transmission (103c) are structurally identical.

8. Model séries (101) according to the preceding claim, referred back to Claim 2; **characterized in that**
the width of the teeth of the planet gears (129a, 129b) of the second planetary stages (107a, 107b) of the first transmission (103a) and of the second transmission (103b) differs from the width of the teeth of the planet gears (129c, 129d) of the second planetary stages (107a, 107b) of the third transmission (103c) and of the fourth transmission (103d).

9. Model séries (101) according to any of the preceding claims; **characterized in that**
all planet carriers (125a, 125b, 125c, 125d) of the second planetary stages (107a, 107b, 107c, 107d) of the transmissions (103a, 103b, 103c, 103d) are structurally identical.

10. Model séries (101) according to any of the preceding claims; **characterized in that**
all internal gears (127a, 127b, 127c, 127d) of the second planetary stages (107a, 107b, 107c, 107d) of the transmissions (103a, 103b, 103c, 103d are structurally identical.

11. Model séries (101) according to any of the preceding claims; **characterized in that**
all sun gears (135a, 135b, 135c, 135d) of the second planetary stages (107a, 107b, 107c, 107d) of the transmissions (103a, 103b, 103c, 103d are structurally identical.

12. Model séries (101) according to any of the preceding claims; **characterized in that**
the first planetary stage (105a, 105b, 105c, 105d) has one or more planet journals (117a, 117b, 117c, 117d); wherein
all planet journals (117a, 117b, 117c, 117d) of the first planetary stages (105a, 105b, 105c, 105d) of the transmissions (103a, 103b, 103c, 103d) are structurally identical.

13. Model séries (101) according to any of the preceding claims; **characterized in that**
the second planetary stage (107a, 107b, 107c, 107d) has one or more planet journals (133a, 133b, 133c, 133d); wherein
all planet journals (133a, 133b, 133c, 133d) of the second planetary stages (107a, 107b, 107c, 107d) of the transmissions (103a, 103b, 103c, 103d) are structurally identical.

14. Model séries (101) according to any of the preceding claims; **characterized in that**
the first planetary stage (105a, 105b, 105c, 105d) has one or more planet bearings (); wherein
the planet bearings (115a, 115b, 115c, 115d) of the first planetary stages (105a, 105b, 105c, 105d) of the transmissions (103a, 103b, 103c, 103d) are structurally identical.

15. Model séries (101) according to any of the preceding claims; **characterized in that**
the second planetary stage (107a, 107b, 107c, 107d) has one or more planet bearings (131a, 131b, 131c, 131d); wherein
the planet bearings (131a, 131b, 131c, 131d) of the second planetary stages (107a, 107b, 107c, 107d) of the transmissions (103a, 103b, 103c, 103d) are structurally identical.

16. Model séries (101) according to any of the preceding claims; **characterized in that**
the first planetary stage (105a, 105b, 105c, 105d) has one or more planet carrier bearings (121a, 121b, 121c, 121d); wherein
the planet carrier bearings (121a, 121b, 121c, 121d) of the first planetary stages (105a, 105b, 105c, 105d) of the transmissions (103a, 103b, 103c, 103d) are structurally identical.

17. Model séries (101) according to any of the preceding claims; **characterized in that**
the second planetary stage (107a, 107b, 107c, 107d) has one or more planet carrier bearings (139a, 139b, 139c, 139d); wherein
the planet carrier bearings (139a, 139b, 139c, 139d) of the second planetary stages (107a, 107b, 107c, 107d) of the transmissions (103a, 103b, 103c, 103d) are structurally identical.
